# EUROPÄISCHE PATENTSCHRIFT

(11) **EP 3 181 402 B1**
(45) Veröffentlichungstag und Bekanntmachung des Hinweises auf die Patenterteilung: **19.02.2020**
(21) Anmeldenummer: 16203791.5
(22) Anmeldetag: 13.12.2016
(51) Int. Cl.: B60Q 1/08

(54) **STEUERN EINES EINSTELLBAREN SCHEINWERFERS EINES KRAFTFAHRZEUGS**
CONTROL OF AN ADJUSTABLE HEADLAMP OF AN AUTOMOTIVE VEHICLE
COMMANDE D'UN PHARE RÉGLABLE DE VÉHICULE AUTOMOBILE

(30) Priorität: 15.12.2015 DE 102015016333
(43) Veröffentlichungstag der Anmeldung: 21.06.2017
(73) Patentinhaber: AUDI AG, 85045 Ingolstadt (DE)
(72) Erfinder: Gut, Carsten, 88662 Überlingen (DE)

(56) Entgegenhaltungen:
- EP-A1- 2 631 122
- EP-A2- 2 933 143
- DE-A1-102009 051 485
- US-A1- 2015 217 677

## Beschreibung

Die Erfindung betrifft ein Verfahren zum Steuern eines einstellbaren Scheinwerfers eines Kraftfahrzeugs, wobei mittels einer Hinderniserfassungseinheit eine Hindernisposition eines Hindernisses in einem Nahbereich des Kraftfahrzeugs erfasst wird, ein Abstand zwischen der Hindernisposition und einer Kraftfahrzeugsposition ermittelt wird und abhängig von dem ermittelten Abstand eine Lichtstärke des Scheinwerfers eingestellt wird. Weiterhin betrifft die Erfindung eine Beleuchtungseinrichtung für ein Kraftfahrzeug, mit einem Scheinwerfer, einer Steuereinheit zum Einstellen einer Lichtstärke des Scheinwerfers und einer Hinderniserfassungseinheit zum Erfassen einer Hindernisposition eines Hindernisses in einem Nahbereich des Kraftfahrzeugs, wobei die Steuereinheit an die Hinderniserfassungseinheit angeschlossen ist und ausgebildet ist, einen Abstand zwischen der Hindernisposition und einer Kraftfahrzeugsposition zu ermitteln und abhängig von dem ermittelten Abstand eine Lichtstärke des Scheinwerfers einzustellen. Ferner betrifft die Erfindung ein Kraftfahrzeug.

Gattungsgemäße Beleuchtungsvorrichtungen sowie Verfahren zum Steuern von einstellbaren Scheinwerfern sind aus dem Stand der Technik bekannt, so beispielsweise aus der DE 10 2012 008 066 A1, die ein Verfahren und eine Vorrichtung zur Steuerung eines Scheinwerfers für ein Fahrzeug offenbart, sowie aus der DE 10 2012 001 017 A1, die einen Kraftfahrzeugscheinwerfer mit einer oder mehreren Lichtquellen offenbart.

Ferner offenbart die EP 2 933 143 A2 eine Beleuchtungsvorrichtung, die US 2015/0217677 A1 ein Steuergerät für einen Fahrzeugscheinwerfer sowie ein Steuerverfahren und die DE 10 2009 051 485 A1 ein Verfahren und eine Vorrichtung zur Steuerung eines Fahrlichts eines Fahrzeugs. Schließlich offenbart die EP 2 631 122 A1 eine Scheinwerfervorrichtung sowie ein Scheinwerfersteuersystem.

Obwohl sich der Stand der Technik grundsätzlich bewährt hat, hat es sich als nachteilig herausgestellt, dass Lebewesen in einem Nahbereich um das Kraftfahrzeug herum vom Licht des Scheinwerfers erfasst und gegebenenfalls auch geblendet werden können. Dieses Problem tritt insbesondere bei modernen Scheinwerfern mit hoher Lichtstärke auf. Beispielsweise erweist es sich als nachteilig, wenn das Kraftfahrzeug auf einem Parkplatz, beispielsweise einem Kundenparkplatz eines Kaufhauses oder dergleichen, rangiert wird und in nächster Nähe Lebewesen, beispielsweise Personen, Haustiere oder dergleichen von einem Lichtkegel des Scheinwerfers erfasst werden. Bei einer etwaigen Blendsituation kann das Lebewesen irritiert reagieren. Zumindest kann es seinen geplanten Bewegungsablauf aufgrund einer Blendwirkung nicht fortsetzen. Dies kann nicht nur hinderlich sein, sondern auch gefährliche Zustände zur Folge haben.

Es ist deshalb die Aufgabe der Erfindung, ein Verfahren zum Steuern eines Scheinwerfers der gattungsgemäßen Art beziehungsweise eine Beleuchtungseinrichtung der gattungsgemäßen Art sowie ein Kraftfahrzeug dahingehend zu verbessern, dass Auswirkungen auf Lebewesen reduziert werden können.

Als Lösung wird mit der Erfindung ein Verfahren nach Anspruch 1 vorgeschlagen. Mit den weiteren unabhängigen Ansprüchen 9 und 10 wird eine Beleuchtungseinrichtung für ein Kraftfahrzeug sowie ein Kraftfahrzeug vorgeschlagen.

Weitere vorteilhafte Ausgestaltungen der Erfindung ergeben sich anhand von Merkmalen der abhängigen Ansprüche.

Mit der Erfindung wird bei einem gattungsgemäßen Verfahren insbesondere vorgeschlagen, dass mittels der Hinderniserfassungseinheit erfasst wird, ob das Hindernis ein Lebewesen ist, und bei Erfassen eines Lebewesens unter Berücksichtigung des ermittelten Abstands eine Lichtstärke für den Scheinwerfer berechnet wird, die an der Hindernisposition eine vorgegebene Blendschwelle unterschreitet, und der Scheinwerfer derart eingestellt wird, dass die berechnete Lichtstärke an der Hindernisposition erzeugt wird.

Hinsichtlich der Beleuchtungseinrichtung wird mit der Erfindung insbesondere vorgeschlagen, dass bei einer gattungsgemäßen Beleuchtungseinrichtung die Hinderniserfassungseinheit ausgebildet ist, zu erfassen, ob das Hindernis ein Lebewesen ist, und die Steuereinheit ausgebildet ist, bei Erfassen eines Lebewesens unter Berücksichtigung des ermittelten Abstands eine Lichtstärke für den Scheinwerfer zu berechnen, die an der Hindernisposition eine vorgegebene Blendschwelle unterschreitet, und den Scheinwerfer derart einzustellen, die berechnete Lichtstärke an der Hindernisposition zu erzeugen.

Kraftfahrzeugseitig wird mit der Erfindung insbesondere vorgeschlagen, dass das Kraftfahrzeug eine Beleuchtungseinrichtung gemäß der Erfindung aufweist.

Die Erfindung nutzt die Einstellbarkeit des Scheinwerfers dazu aus, am Hindernisort eine vorgegebene Blendschwelle nicht zu überschreiten, sodass ein als Hindernis erkanntes Lebewesen möglichst nicht geblendet wird. Die vorgegebene Blendschwelle ist vorzugsweise durch die Normung, insbesondere die ECE-Normung festgelegt, und beträgt beispielsweise 312,5 cd.

Der Nahbereich bezeichnet einen Bereich um das Kraftfahrzeug herum, der einen Abstand von weniger als 15 m, insbesondere weniger als 10 m umfasst. Vorzugsweise wird hierdurch eine Fahrsituation erfasst, wie sie häufig beim Rangieren des Kraftfahrzeugs auf einem Parkplatz auftritt. Die Erfindung ist jedoch hierauf nicht beschränkt. So kann auch während des normalen Fahrbetriebs ein Hindernis erkannt werden, welches sich bei weiterer Analyse als Lebewesen herausstellt und eine entsprechende Steuerung des Scheinwerfers zur Folge haben, beispielsweise wenn eine Person oder ein Haustier eine Straße überquert, insbesondere bei Überqueren an einem Zebrastreifen oder dergleichen. Infolgedessen ergibt sich, dass der Begriff "Lebewesen" nicht nur natürliche Personen, sondern auch beispielsweise Haustiere, Nutztiere oder dergleichen umfassen kann. Vorzugsweise sind Insekten und kleine Reptilien nicht als Hindernis im Sinne der Erfindung zu verstehen. Dagegen kann vorgesehen sein, dass der Begriff "Lebewesen" auch Wildtiere, beispielsweise Schwarzwild, Dammwild oder dergleichen umfasst. Eine Erkennungsmöglichkeit zum Erkennen, ob ein Hindernis durch ein vorbeschriebenes Lebewesen gebildet ist, ist beispielsweise in der DE 11 2013 002 898 T5 offenbart.

Eine Hinderniserfassungseinheit zum Erfassen eines Hindernisses im Nahbereich des Kraftfahrzeugs kann beispielsweise auf der Nutzung von Radar, Ultraschall oder dergleichen basieren. Dadurch kann ein Abstand des Hindernisses zum Kraftfahrzeug ermittelt werden. Mit der Erfindung wird vorgeschlagen, dass die Hinderniserfassungseinheit ergänzt wird, um die Möglichkeit, zu erfassen, ob das Hindernis ein Lebewesen ist. Zu diesem Zweck kann beispielsweise ein entsprechender Auswertealgorithmus durch die Hinderniserfassungseinheit realisiert sein, der das Hindernis, welches erfasst worden ist, näher analysiert. Zu diesem Zweck können beispielsweise Abmessungen, thermische Eigenschaften, Eigenbewegungen, Kombinationen hiervon oder dergleichen ausgewertet werden. Besonders vorteilhaft eignen sich hierfür selbstlernende Algorithmen, die sich adaptiv an zu erfassende Lebewesen als Hindernisse anpassen und dadurch ihre Genauigkeit stetig verbessern.

Der einstellbare Scheinwerfer weist vorzugsweise eine Lichtquelle auf, die mittels der Steuereinheit hinsichtlich einer emittierten Lichtstärke einstellbar ist. Dadurch kann der Scheinwerfer so eingestellt werden, dass die vorgegebene Blendschwelle nicht überschritten wird. Die vorgegebene Blendschwelle kann in der Steuereinheit fest eingespeichert sein. Darüber hinaus kann sie auch durch einen einstellbaren Parameter gebildet sein, der anwendungsspezifisch gewählt werden kann. Darüber hinaus kann natürlich vorgesehen sein, dass die Blendschwelle in Abhängigkeit des erfassten Lebewesens verändert werden kann, beispielsweise indem bei einem Wildtier als Lebewesen eine reduzierte Blendschwelle als vorgegebene Blendschwelle eingestellt wird. Vorzugsweise ist die vorgegebene Blendschwelle jedoch durch die Normung definiert und fest eingestellt.

Die Steuereinheit umfasst ferner eine Rechnereinheit, mittels der die erforderliche Berechnung durchgeführt werden kann. Die Berechnung berücksichtigt die Position und Ausrichtung des Kraftfahrzeugs sowie des Scheinwerfers und die Hindernisposition des erfassten Lebewesens und berechnet unter weiterer Berücksichtigung der vorgegebenen Blendschwelle die Lichtstärke, auf die der Scheinwerfer eingestellt werden soll. Sodann wird ein entsprechendes Steuersignal erzeugt, mittels welchem der Scheinwerfer, insbesondere seine Lichtquelle derart eingestellt wird, dass an der Hindernisposition gemäß der Berechnung eine Lichtstärke erzeugt wird, die die Blendschwelle nicht überschreitet. Die Steuereinheit kann zu diesem Zweck insgesamt als Rechnereinheit ausgebildet sein, die unter Nutzung eines Rechnerprogramms die erforderliche Berechnung durchführt. Darüber hinaus kann natürlich vorgesehen sein, dass die Steuereinheit zumindest teilweise als elektronische Hardware-Baugruppe ausgebildet ist, die die entsprechenden Berechnungen durchführen kann.

Darüber hinaus ist vorgesehen, dass das Erfassen des Lebewesens erst bei Unterschreiten einer Vergleichsgeschwindigkeit des Kraftfahrzeugs erfolgt. Dieser Aspekt nutzt die Erkenntnis, dass Blendwirkungen insbesondere im Stadtverkehr und hier besonders beim Rangieren des Kraftfahrzeugs, beispielsweise auf einem Parkplatz oder dergleichen, vorliegen können. Bei höheren Geschwindigkeiten ist in der Regel anzunehmen, dass sich das Kraftfahrzeug in einem Bereich, insbesondere auf einer Straße bewegt, die für höhere Geschwindigkeiten zugelassen ist und auf der in unmittelbarer Nähe nicht mit Lebewesen gerechnet zu werden braucht. Aufgrund der höheren Geschwindigkeit steht hier auch der Sicherheitsaspekt in Bezug auf eine gute Ausleuchtung des Bereichs, auf den das Kraftfahrzeug zufährt, im Vordergrund. Bei einer solchen Situation braucht deshalb eher nicht mit Lebewesen gerechnet zu werden. Eine Vergleichsgeschwindigkeit kann beispielsweise bei 50 km/h, 70 km/h oder auch höher gewählt sein.

In einer vorteilhaften Weiterbildung der Erfindung wird vorgeschlagen, dass die Lichtstärke in Abhängigkeit von einer Relativgeschwindigkeit zwischen dem Kraftfahrzeug und dem Lebewesen berechnet wird. Dies nutzt die Erkenntnis, dass bei einer Bewegung des Kraftfahrzeugs auf das Hindernis beziehungsweise das Lebewesen zu eine reduzierte vorgegebene Blendschwelle zur Berechnung der Lichtstärke genutzt werden kann, um möglichst sicherzustellen, dass die Blendschwelle auch bei einer Bewegung auf das Lebewesen zu weitgehend nicht überschritten wird. Im Gegenzug kann bei einer Bewegung von dem Lebewesen weg vorgesehen sein, dass die berechnete Lichtstärke unter Zugrundelegung einer erhöhten vorgegebenen Blendschwelle ermittelt wird, die berücksichtigt, dass mit zunehmender Entfernung eine etwaige Blendwirkung reduziert ist. In diesem Fall braucht auf ein etwaiges Blenden des Lebewesens weniger Rücksicht genommen zu werden, sodass die eigentliche Beleuchtungsfunktion durch den Scheinwerfer besser berücksichtigt werden kann. Insgesamt kann hierdurch eine höhere Flexibilität in Bezug auf die Erfindung erreicht werden.

Weiterhin wird vorgeschlagen, dass das Einstellen der Lichtstärke in Abhängigkeit von einer Fahrtrichtung des Kraftfahrzeugs in Bezug auf das Lebewesen erfolgt. So kann vorgesehen sein, dass die vorgegebene Blendschwelle angehoben wird, wenn die Fahrtrichtung vom erfassten Lebewesen als Hindernis weg erfolgt beziehungsweise ändert. Dagegen kann die vorgegebene Blendschwelle abgesenkt werden, wenn sich die Fahrtrichtung in Richtung des als Hindernis erfassten Lebewesens ändert. Auch hierdurch kann die Flexibilität der Erfindung weiter verbessert werden.

Gemäß einer weiteren vorteilhaften Ausgestaltung wird vorgeschlagen, dass der Scheinwerfer als Pixelscheinwerfer ausgebildet ist und das Einstellen ausschließlich in einem Bereich erfolgt, der mit der Hindernisposition korrespondiert. Diese Ausgestaltung macht sich zunutze, dass der Scheinwerfer einen größeren Bereich ausleuchtet, als der Bereich, der durch das Hindernis eingenommen wird. Deshalb ist zur Vermeidung der Blendwirkung lediglich im Bereich der Hindernisposition das Einhalten der Blendschwelle erforderlich. Im darüber hinausgehenden Bereich kann eine Blendwirkung nicht auftreten. Hier kommt der Vorteil des Pixelscheinwerfers zum Einsatz, der so gesteuert werden kann, dass er lediglich im Bereich der Hindernisposition gesteuert zu werden braucht, um die Blendwirkung zu vermeiden. Dadurch wird ein Einfluss auf die Beleuchtungssituation insgesamt weitgehend reduziert, weil nicht der gesamte Scheinwerfer hinsichtlich seiner Beleuchtung gesteuert beziehungsweise gedimmt zu werden braucht, sondern lediglich der relevante Teil für den korrespondierenden Bereich. In diesem Zusammenhang ist die Hinderniserfassungseinheit vorzugsweise dazu ausgebildet, den Bereich, der mit der Hindernisposition korrespondiert zu erfassen und der Steuereinheit eine entsprechende Information zu übermitteln. Die Steuereinheit kann dann beispielsweise die Pixel des Pixelscheinwerfers ermitteln, die zum Vermeiden der Blendwirkung für das Lebewesen anzusteuern sind. Dadurch kann der Einfluss auf die Gesamtbeleuchtungssituation gering gehalten werden und zugleich eine Blendwirkung für das erfasste Lebewesen reduziert werden.

Gemäß einer weiteren Ausgestaltung wird vorgeschlagen, dass die Hinderniserfassungseinheit eine Infrarotstrahlung des Hindernisses, insbesondere des Lebewesens erfasst. Dadurch ist es möglich, eine genauere Unterscheidung bezüglich eines Lebewesens und eines sonstigen Hindernisses zu erreichen. Unnötige Abblendungen aufgrund von fälschlich als Lebewesen erkannten Hindernissen können dadurch reduziert werden.

Weiterhin wird vorgeschlagen, dass mittels der Hinderniserfassungseinheit eine Bewegung des Lebewesens beziehungsweise des Hindernisses erfasst wird. Zu diesem Zweck kann die Hinderniserfassungseinheit beispielsweise eine Fahrzeugkamera umfassen beziehungsweise auf eine Fahrzeugkamera zugreifen. Durch die Erfassung der Bewegung des Hindernisses beziehungsweise des Lebewesens kann die Unterscheidbarkeit zwischen einem Lebewesen und einem sonstigen Hindernis weiter verbessert werden.

Vorteilhaft ist es ferner, wenn das Berechnen der Lichtstärke und das Einstellen des Scheinwerfers kontinuierlich wiederholt wird. Dadurch ist es möglich, Veränderungen im Abstand zwischen dem Lebewesen und dem Kraftfahrzeug möglichst ständig zu berücksichtigen und die Lichtstärke des Scheinwerfers vorzugsweise kontinuierlich anzupassen. Dadurch kann eine weitere Reduktion einer Blendwirkung erreicht werden wobei zugleich weiterhin eine gute Ausleuchtung gewahrt werden kann. Das Wiederholen kann von der Geschwindigkeit des Kraftfahrzeugs abhängig sein. So kann eine Wiederholungsrate bei geringer Geschwindigkeit niedriger als bei hoher Geschwindigkeit sein. Vorzugsweise ist die Wiederholungsrate von der Geschwindigkeit des Kraftfahrzeugs unmittelbar abhängig.

Weitere Vorteile und Merkmale sind der folgenden Beschreibung eines Ausführungsbeispiels zu entnehmen.

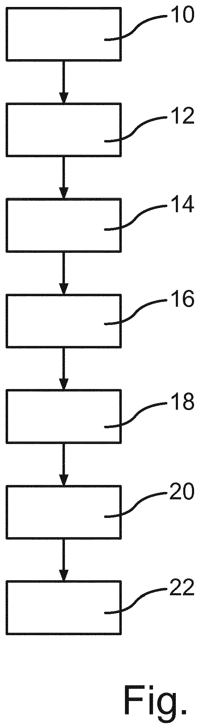

Es zeigt die einzige Figur in einer schematischen Darstellung einen Verfahrensablauf zum Steuern eines Scheinwerfers eines Kraftfahrzeugs gemäß der Erfindung.

Es zeigt die einzige Figur in schematischer Darstellung einen Verfahrensverlauf zum Steuern eines einstellbaren Scheinwerfer eines Kraftfahrzeugs gemäß der Erfindung. In einem ersten Schritt 10 ist vorgesehen, dass der einstellbare Scheinwerfer mittels einer Steuereinheit hinsichtlich der von ihm emittierten Lichtstärke gesteuert wird. Im folgenden Schritt 12 wird mittels einer Hinderniserfassungseinheit eine Hindernisposition eines Hindernisses in einem Nahbereich des Kraftfahrzeugs erfasst. Der Nahbereich ist vorliegend durch einen Abstand von weniger als 10 m um das Kraftfahrzeug herum bestimmt. Der Abstand ist hier auf die Außenabmessungen des Kraftfahrzeugs bezogen. Alternativ könnte er auch auf die Position der in Kraftfahrzeug angeordneten Hinderniserfassungseinheit bezogen sein.

Die Hinderniserfassungseinheit nutzt vorliegend Ultraschall, um ein Hindernis zu erfassen und seine Position zu ermitteln. Sodann wird ein Abstand zwischen der Hindernisposition und einer Kraftfahrzeugposition ermittelt (Schritt 14). Die Kraftfahrzeugposition kann durch ein Navigationssystem des Kraftfahrzeugs, einen GPS-Empfänger und/oder dergleichen ermittelt werden. Mittels der Steuereinheit wird sodann abhängig von dem ermittelten Abstand eine Lichtstärke des Scheinwerfers gemäß Schritt 16 eingestellt.

Erfindungsgemäß wird mittels der Hinderniserfassungseinheit ergänzend erfasst, ob das Hindernis ein Lebewesen ist. Zu diesem Zweck ist die Hinderniserfassungseinheit dazu ausgebildet, Infrarotsignale zu erfassen. Zugleich ist die Hinderniserfassungseinheit ausgebildet, Bewegungen zu erfassen. Daraus wird mittels einer Rechenvorschrift ermittelt, ob es sich bei dem Hindernis um ein Lebewesen oder ein sonstiges Hindernis handelt (Schritt 18).

Ist das Hindernis als Lebewesen erkannt, wird mittels der Steuereinheit unter Berücksichtigung des ermittelten Abstands eine Lichtstärke für den Scheinwerfer berechnet (Schritt 20), die an der Hindernisposition des Lebewesens eine vorgegebene Blendschwelle unterschreitet. Die vorgegebene Blendschwelle ist vorliegend durch eine Lichtstärke von 312,5 cd gegeben, wie es durch die ECE-Normung festgelegt ist. Die Berechnung berücksichtigt ferner vorzugsweise die Augenhöhe des Lebewesens sowie die geometrische Position des Scheinwerfers im Kraftfahrzeug selbst. Dadurch kann der genaue Abstand ermittelt werden und unter Berücksichtigung der vorgegebenen Blendschwelle die geeignete Lichtstärke für den Scheinwerfer berechnet werden (Schritt 20). Die Steuereinheit stellt dann im Schritt 22 den Scheinwerfer derart ein, dass die berechnete Lichtstärke an der Hindernisposition erzeugt wird (Schritt 22).

Ferner ist vorliegend vorgesehen, dass der Verfahrensablauf bei Geschwindigkeiten größer als 50 km/h nicht aktiviert wird. Bei dieser Ausgestaltung wird davon ausgegangen, dass bei Geschwindigkeiten über 50 km/h eine Blendwirkung in der Regel ausgeschlossen werden kann, weil sich im Nahbereich des Kraftfahrzeugs keine Lebewesen aufhalten sollten.

Darüber hinaus ist in der vorliegenden Ausgestaltung vorgesehen, dass eine Bewegungsrichtung vom Kraftfahrzeug in Bezug auf das Lebewesen berücksichtigt wird. Erfolgt die Bewegung nicht unmittelbar auf das Lebewesen zu, wird der erfindungsgemäße Verfahrensablauf nicht aktiviert. Ändert sich jedoch die Bewegung auf das Lebewesen zu, wird das erfindungsgemäße Verfahren aktiviert. Dies berücksichtigt, dass sich das Lebewesen möglicherweise selbst, beispielsweise quer zu einer Fahrtrichtung des Kraftfahrzeugs, bewegt und somit eine Blendwirkung auftreten kann. Damit eine Blendwirkung auch in dynamischen Situationen vermieden werden kann, sieht die vorliegende Ausgestaltung vor, dass das Verfahren der Erfindung kontinuierlich wiederholt wird. Dadurch kann auf Änderungen einer bereits erfassten Situation reagiert und die Einstellung der Lichtstärke des Scheinwerfers gegebenenfalls angepasst werden.

Das Ausführungsbeispiel dient lediglich der Erläuterung der Erfindung und ist für diese nicht beschränkend. Natürlich können Funktionen, insbesondere in Bezug auf die Ermittlung der Blendwirkung variieren, ohne den Gedanken der Erfindung zu verlassen. Darüber hinaus kann natürlich vorgesehen sein, dass sämtliche Einheiten der Beleuchtungseinrichtung im Scheinwerfer des Kraftfahrzeugs integriert angeordnet sind. Dadurch kann eine autarke Einheit geschaffen werden. Schließlich ist anzumerken, dass die für das erfindungsgemäße Verfahren beschriebenen Vorteile und Merkmale sowie Ausführungsformen gleichermaßen für die entsprechenden Beleuchtungseinrichtung gelten und umgekehrt. Insbesondere können für Verfahrensmerkmale entsprechende Vorrichtungsmerkmale und umgekehrt vorgesehen sein.

## Patentansprüche

1. Verfahren zum Steuern eines einstellbaren Scheinwerfers eines Kraftfahrzeugs (10), wobei mittels einer Hinderniserfassungseinheit eine Hindernisposition eines Hindernisses in einem Nahbereich des Kraftfahrzeugs erfasst (12) wird, ein Abstand zwischen der Hindernisposition und einer Kraftfahrzeugposition ermittelt (14) wird und abhängig von dem ermittelten Abstand eine Lichtstärke des Scheinwerfers eingestellt (16) wird, wobei mittels der Hinderniserfassungseinheit erfasst wird, ob das Hindernis ein Lebewesen ist, und bei Erfassen eines Lebewesens (18) unter Berücksichtigung des ermittelten Abstands eine Lichtstärke für den Scheinwerfer berechnet (20) wird, die an der Hindernisposition eine vorgegebene Blendschwelle unterschreitet, und der Scheinwerfer derart eingestellt wird, dass die berechnete Lichtstärke an der Hindernisposition erzeugt (22) wird, **dadurch gekennzeichnet, dass** das Erfassen des Lebewesens erst bei Unterschreiten einer Vergleichsgeschwindigkeit des Kraftfahrzeugs erfolgt, wobei der Nahbereich einen Bereich um das Kraftfahrzeug herum bezeichnet, der einen Abstand von weniger als 15 m umfasst.

2. Verfahren nach Anspruch 1, **dadurch gekennzeichnet, dass** die Lichtstärke in Abhängigkeit von einer Relativgeschwindigkeit zwischen dem Kraftfahrzeug und dem Lebewesen berechnet (20) wird.

3. Verfahren nach Anspruch 1 oder 2, **dadurch gekennzeichnet, dass** das Einstellen (16) der Lichtstärke in Abhängigkeit von einer Fahrtrichtung des Kraftfahrzeugs in Bezug auf das Lebewesen erfolgt.

4. Verfahren nach einem der Ansprüche 1 bis 3, **dadurch gekennzeichnet, dass** der Scheinwerfer als Pixelscheinwerfer ausgebildet ist und das Einstellen (16) ausschließlich in einem Bereich erfolgt, der mit der Hindernisposition korrespondiert.

5. Verfahren nach einem der Ansprüche 1 bis 4, **dadurch gekennzeichnet, dass** mittels der Hinderniserfassungseinheit eine Infrarotstrahlung des Lebewesens erfasst wird.

6. Verfahren nach einem der Ansprüche 1 bis 5, **dadurch gekennzeichnet, dass** mittels der Hinderniserfassungseinheit eine Bewegung des Lebewesens erfasst wird.

7. Verfahren nach einem der Ansprüche 1 bis 6, **dadurch gekennzeichnet, dass** das Berechnen (20) der Lichtstärke und das Einstellen (16) des Scheinwerfers kontinuierlich wiederholt wird.

8. Beleuchtungseinrichtung für ein Kraftfahrzeug, mit einem Scheinwerfer, einer Steuereinheit zum Einstellen (16) einer Lichtstärke des Scheinwerfers und einer Hinderniserfassungseinheit zum Erfassen einer Hindernisposition (12) eines Hindernisses in einem Nahbereich des Kraftfahrzeugs, wobei die Steuereinheit an die Hinderniserfassungseinheit angeschlossen ist und ausgebildet ist, einen Abstand zwischen der Hindernisposition und einer Kraftfahrzeugposition zu ermitteln (14) und abhängig von dem ermittelten Abstand eine Lichtstärke des Scheinwerfers einzustellen (16), wobei die Hinderniserfassungseinheit ausgebildet ist, zu erfassen, ob das Hindernis ein Lebewesen ist, und die Steuereinheit ausgebildet ist, bei Erfassen eines Lebewesens unter Berücksichtigung des ermittelten Abstands eine Lichtstärke für den Scheinwerfer zu berechnen (20), die an der Hindernisposition eine vorgegebene Blendschwelle unterschreitet, und den Scheinwerfer derart einzustellen, die berechnete Lichtstärke an der Hindernisposition zu erzeugen (22), **dadurch gekennzeichnet, dass** die Hinderniserfassungseinheit ausgebildet ist, das Lebewesen erst bei Unterschreiten einer Vergleichsgeschwindigkeit des Kraftfahrzeugs zu erfassen, wobei der Nahbereich einen Bereich um das Kraftfahrzeug herum bezeichnet, der einen Abstand von weniger als 15 m umfasst.

9. Kraftfahrzeug **gekennzeichnet durch** einen Beleuchtungseinrichtung nach Anspruch 8.

## Claims

1. Method for controlling an adjustable headlight of a motor vehicle (10), wherein an obstacle position of an obstacle in a vicinity of the motor vehicle is detected (12) by means of an obstacle detection unit, a distance between the obstacle position and a motor vehicle position is determined (14) and a luminous intensity of the headlight is adjusted (16) depending on the determined distance, wherein the obstacle detection unit detects whether the obstacle is a living being, and upon detection of a living being (18) calculates (20) a luminous intensity for the headlight, taking into account the determined distance, which luminous intensity falls below a predetermined glare threshold at the obstacle position, and the headlight is adjusted such that the calculated luminous intensity is produced (22) at the obstacle position, **characterised in that** the detection of the living being takes place only when a comparison speed of the motor vehicle is undershot, wherein the vicinity is defined as a range around the motor vehicle which has a distance of less than 15 m.

2. Method as claimed in claim 1, **characterised in that** the luminous intensity is calculated (20) in dependence on a relative speed between the motor vehicle and the living being.

3. Method as claimed in claim 1 or 2, **characterised in that** the adjustment (16) of the luminous intensity takes place in dependence on a direction of travel of the motor vehicle with respect to the living being.

4. Method as claimed in any one of the claims 1 to 3, **characterised in that** the headlight is designed as a pixel headlight and the adjustment (16) takes place exclusively in a range corresponding to the obstacle position.

5. Method as claimed in any one of the claims 1 to 4, **characterised in that** by means of the obstacle detection unit, an infrared radiation of the living being is detected.

6. Method as claimed in any one of the claims 1 to 5, **characterised in that** by means of the obstacle detection unit a movement of the living being is detected.

7. Method as claimed in any one of the claims 1 to 6, **characterised in that** the calculation (20) of the luminous intensity and the adjustment (16) of the headlight is repeated continuously.

8. Lighting device for a motor vehicle, comprising a headlight, a control unit for adjustment (16) of a luminous intensity of the headlight and an obstacle detection unit for detecting an obstacle position (12) of an obstacle in a vicinity of the motor vehicle, wherein the control unit is connected to the obstacle detection unit and is designed to determine (14) a distance between the obstacle position and a motor vehicle position and to adjust (16) a luminous intensity of the headlight depending on the determined distance, wherein the obstacle detection unit is designed to detect whether the obstacle is a living being, and the control unit is designed, upon detection of the living being, to calculate (20) a luminous intensity for the headlight, taking into account the determined distance, which luminous intensity falls below a predetermined glare threshold, and to adjust the headlight to produce (22) the calculated luminous intensity at the obstacle position, **characterised in that** the obstacle detection unit is designed to detect the living being only when a comparison speed of the motor vehicle is undershot, wherein the vicinity is defined as a range around the motor vehicle which has a distance of less than 15 m.

9. Motor vehicle **characterised by** a lighting device according to claim 8.

## Revendications

1. Procédé de commande d'un phare réglable d'un véhicule automobile (10), dans lequel une position d'obstacle d'un obstacle à proximité du véhicule automobile est détectée (12) au moyen d'une unité de détection d'obstacle, une distance entre la position d'obstacle et une position de véhicule automobile est déterminée (14) et une intensité lumineuse du phare est réglée (16) en fonction de la distance déterminée, dans lequel il est détecté au moyen de l'unité de détection d'obstacle si l'obstacle est un être vivant, et en cas de détection d'un être vivant (18) une intensité lumineuse est calculée (20) pour le phare en tenant compte de la distance déterminée, qui est inférieure à un seuil d'éblouissement prédéfini au niveau de la position d'obstacle, et le phare est réglé de sorte que l'intensité lumineuse calculée est générée (22) au niveau de la position d'obstacle, **caractérisé en ce que** la détection de l'être vivant n'a lieu que lors du sous-dépassement d'une valeur de comparaison du véhicule automobile, dans lequel la proximité désigne une zone autour du véhicule automobile, qui couvre une distance de moins de 15 m.

2. Procédé selon la revendication 1, **caractérisé en ce que** l'intensité lumineuse est calculée (20) en fonction d'une vitesse relative entre le véhicule automobile et l'être vivant.

3. Procédé selon la revendication 1 ou 2, **caractérisé en ce que** le réglage (16) de l'intensité lumineuse se fait en fonction d'un sens de circulation du véhicule automobile par rapport à l'être vivant.

4. Procédé selon l'une quelconque des revendications 1 à 3, **caractérisé en ce que** le phare est réalisé en tant que phare de pixels et le réglage (16) a lieu exclusivement dans une zone, quoi correspond à la position d'obstacle.

5. Procédé selon l'une quelconque des revendications 1 à 4, **caractérisé en ce qu'**un rayonnement infrarouge de l'être vivant est détecté au moyen de l'unité de détection d'obstacle.

6. Procédé selon l'une quelconque des revendications 1 à 5, **caractérisé en ce qu'**un mouvement de l'être vivant est détecté au moyen de l'unité de détection d'obstacle.

7. Procédé selon l'une quelconque des revendications 1 à 6, **caractérisé en ce que** le calcul (20) de l'intensité lumineuse et le réglage (16) du phare sont répétés en continu.

8. Dispositif d'éclairage pour un véhicule automobile, avec un phare réglable, une unité de commande pour le réglage (16) d'une intensité lumineuse du phare et une unité de détection d'obstacle pour la détection d'une position d'obstacle (12) d'un obstacle à proximité du véhicule automobile, dans lequel l'unité de commande est raccordée à l'unité de détection d'obstacle et réalisée pour déterminer (14) une distance entre la position d'obstacle et une position de véhicule automobile et régler (16) une intensité lumineuse du phare en fonction de la distance déterminée, dans lequel l'unité de détection d'obstacle est réalisée pour détecter si l'obstacle est un être vivant, et l'unité de commande est réalisée pour calculer (20) en cas de détection d'un être vivant une intensité lumineuse pour le phare en tenant compte de la distance déterminée, qui est inférieure à un seuil d'éblouissement prédéfini au niveau de la position d'obstacle, et régler le phare de sorte à générer (22) l'intensité lumineuse calculée au niveau de la position d'obstacle, **caractérisé en ce que** l'unité de détection d'obstacle est réalisée pour détecter l'être vivant que lors du sous-dépassement d'une valeur de comparaison du véhicule automobile, dans lequel la proximité désigne une zone autour du véhicule automobile, qui couvre une distance de moins de 15 m.

9. Véhicule automobile **caractérisé par** un dispositif d'éclairage selon la revendication 8.
